# EUROPÄISCHE PATENTSCHRIFT

(11) **EP 2 268 493 B1**
(45) Veröffentlichungstag und Bekanntmachung des Hinweises auf die Patenterteilung: **16.05.2018**
(21) Anmeldenummer: 09730339.0
(22) Anmeldetag: 11.03.2009
(51) Int. Cl.: B60C 1/00, B60C 11/00

(54) **FAHRZEUGLUFTREIFEN**
VEHICLE TYRE
PNEUMATIQUE DE VÉHICULE

(30) Priorität: 11.04.2008 DE 102008018345
(43) Veröffentlichungstag der Anmeldung: 05.01.2011
(73) Patentinhaber: Continental Reifen Deutschland GmbH, 30165 Hannover (DE)
(72) Erfinder: WEBER, Christian, 30826 Garbsen (DE)
(74) Vertreter: Finger, Karsten
(86) Internationale Anmeldenummer: PCT/EP2009/052818
(87) Internationale Veröffentlichungsnummer: WO 2009/124816

(56) Entgegenhaltungen:
- EP-A- 0 341 187
- EP-A- 0 662 396
- EP-A- 1 431 078
- EP-A- 1 561 605
- JP-A- 60 135 309
- US-A1- 2007 221 303

## Beschreibung

Die Erfindung betrifft einen Fahrzeugluftreifen, insbesondere für Nutzfahrzeuge, mit einer Radialkarkasse, einem mehrlagigen Gürtel und einem Laufstreifen, welcher im Boden berührenden Bereich einen mittleren Abschnitt aus einer ersten Gummizusammensetzung und zwei Schulterabschnitte aus einer zweiten Gummizusammensetzung aufweist, wobei sich die beiden Gummizusammensetzungen in ihrem Rückprallwert bei Raumtemperatur unterscheiden.

Einen solchen Fahrzeugluftreifen geht zum Beispiel aus dem Dokument EP 1 561 605 A als bekannt hervor. Aus der US-A-4,385,653 ist ein für Personenkraftwagen vorgesehener Fahrzeugluftreifen bekannt, dessen Laufstreifen einen zentralen Abschnitt aus einer ersten Gummizusammensetzung und zwei Schulterabschnitte aus einer zweiten Gummizusammensetzung aufweist. Die Gummizusammensetzungen unterscheiden sich voneinander, wobei die Gummizusammensetzung im zentralen Abschnitt einen geringeren Hystereseverlust aufweist als jene in den beiden Schulterabschnitten. Ein Reifen mit einem derartigen Laufstreifen soll verbesserte Bremseigenschaften und einen geringen Rollwiderstand aufweisen.

Eine Anzahl von Patenten und Patentanmeldungen befasst sich damit, den Laufstreifen vom Reifen aus Abschnitten aus unterschiedlichen Gummizusammensetzungen aufzubauen. So ist beispielsweise aus der EP-B-0864447 ein Reifen bekannt, dessen Laufstreifen zumindest zwei Umfangsabschnitte aus unterschiedlichen Gummizusammensetzungen aufweist. Der eine Abschnitt enthält einen verstärkenden Füllstoff mit einem Anteil von mindestens 40% Ruß, der zweite Abschnitt einen weißen Füllstoff, der in einer Menge von zumindest 20% der Gesamtmenge des verstärkenden Füllstoffes eingesetzt ist. Des Weiteren beträgt die Differenz zwischen den Hysteresewerten bei 70° der ersten und der zweiten Gummizusammensetzung zumindest 10% des höheren Wertes. Durch diese Maßnahmen soll die Temperaturentwicklung im Reifen gering gehalten werden. Bei dem aus der DE-C-19643998 bekannten Reifen soll der Laufstreifen derart ausgeführt sein, dass der Reifen einen geringen Rollwiderstand bei zumindest gleichbleibendem Nass-RutschVerhalten über die gesamte Profiltiefe und außerdem eine gute elektrische Leitfähigkeit besitzt. Zur Lösung dieser Aufgabe wird der Laufstreifen zumindest in einem Schulterbereich, und zwar in einem Randbereich von maximal 15% der mit der Fahrbahn in Berührung kommenden Axialerstreckung des Laufstreifens, aus einer Elastomermischung hergestellt, die 30 bis 80 Gewichtsteile Kieselsäure, bezogen auf 100 Gewichtsteile Kautschuk in der Mischung, enthält.
Nutzfahrzeugreifen, welche insbesondere an Fahrzeugen mit Baustelleneinsatz verwendet werden, zeigen oft ein charakteristisches Abriebsbild mit auffallenden Schäden im mittleren Bereich des Laufstreifens. Die auftretenden Schäden sind Einrisse, Abblätterungen und Ausbrüche, die als "Chipping und Chunking" bezeichnet werden. Die seitlichen Abschnitte des Laufstreifens zeigen weitaus weniger Einrisse und Ausbrüche. Dieses charakteristische Abriebsbild lässt sich mit der unterschiedlichen Druckverteilung in der Aufstandsfläche des Reifens erklären.
Der Erfindung liegt die Aufgabe zugrunde, bei einem Nutzfahrzeugreifen der eingangs genannten Art die Resistenz des Laufstreifens im Laufstreifenmittelbereich gegenüber Chipping und Chunking zu verbessern und den Wärmeaufbau im Schulterbereich zu reduzieren. Diese Teilaufgaben stehen in direktem Zielkonflikt zueinander.
Gelöst wird die gestellte Aufgabe erfindungsgemäß dadurch, dass die Gummizusammensetzung in den Schulterabschnitten einen um mindestens 2% höheren Rückprallwert bei Raumtemperatur aufweist als die Gummizusammensetzung im mittleren Abschnitt. Gemäß der Erfindung weist der Laufstreifen in den Schultern Schulterabschnitte aus einer Gummizusammensetzung mit einer Hysterese auf, die geringer ist als jene der Gummizusammensetzung im Laufstreifenmittelabschnitt. Dadurch ist in den Schulterabschnitten des Reifens der Wärmeaufbau geringer und somit die Gürtelhaltbarkeit durch den geringeren Wärmeaufbau im Bereich der kritischen Gürtelkanten verbessert. Gleichzeitig ist in den Schulterabschnitten auch der Rollwiderstand geringer. Die Gummizusammensetzung im Laufstreifenmittelabschnitt, welche eine höhere Hysterese aufweist, gewährleistet eine gute Resistenz dieses Laufstreifenabschnittes gegen Chipping und Chunking.
Gemäß einer bevorzugten Ausführungsform der Erfindung beträgt die Differenz im Rückprallwert bei Raumtemperatur mindestens 4 % und ist damit besonders vorteilhaft für die Erzielung einer höheren Resistenz gegen Chipping und Chunking im mittleren Abschnitt des Laufstreifens.
Besonders günstig ist es, wenn die Gummizusammensetzungen auch hinsichtlich ihres Weiterreißwiderstandes optimiert sind. Dabei ist es vorteilhaft, wenn die Gummizusammensetzung im mittleren Abschnitt einen Weiterreißwiderstand bei Raumtemperatur aufweist, der um mindestens 10 % größer ist als jener der Gummizusammensetzung der Schulterabschnitte. Die Differenz im Weiterreißwiderstand beträgt vorzugsweise mindestens 15 %. Diese Eigenschaften der beiden Gummizusammensetzungen sind besonders vorteilhaft für die erwünschte Resistenz des Laufstreifens gegen Chipping und Chunking im mittleren Abschnitt. Die Gummizusammensetzungen werden insbesondere derart ausgelegt, dass sie in den Schulterabschnitten einen Rückprallwert bei Raumtemperatur zwischen 40 und 60, insbesondere zwischen 45 und 55 und im mittleren Abschnitt einen Rückprallwert bei Raumtemperatur zwischen 30 und 50, insbesondere zwischen 35 und 45 aufweisen. Von besonderem Vorteil sind ist eine Auslegung der Gummizusammensetzungen derart, dass die Gummizusammensetzung in den Schulterbereichen einen Weiterreißwiderstand zwischen 60 N/mm und 120 N/mm, insbesondere zwischen 75 N/mm und 115 N/mm aufweist, und dass die Gummizusammensetzung im mittleren Abschnitt einen Weiterreißwiderstand zwischen 90 N/mm und 150 N/mm, insbesondere zwischen 100 N/mm und 130 N/mm, aufweist.

Ein Bereich für die optimale Breite der Schulterabschnitte liegt in der Größenordnung von 10 % bis 20 % der Laufstreifenbreite. Der Laufstreifen kann ferner in radialer Richtung - abgesehen von einem gegebenenfalls vorgesehenen Laufstreifenunterteil - aus zumindest zwei Schichten bestehen, wobei die radial äußerste Schicht die beiden Schulterabschnitte und den mittleren Abschnitt aus den Gummizusammensetzungen gemäß der Erfindung aufweist.

Von Vorteil ist es ferner, wenn bei einer mehrschichtigen Auslegung des Laufstreifens die an die radial äußerste Schicht anschließende Schicht aus einer Gummizusammensetzung besteht, deren Rollwiderstand geringer ist als jener der Gummizusammensetzung im mittleren Abschnitt der radial äußersten Schicht.

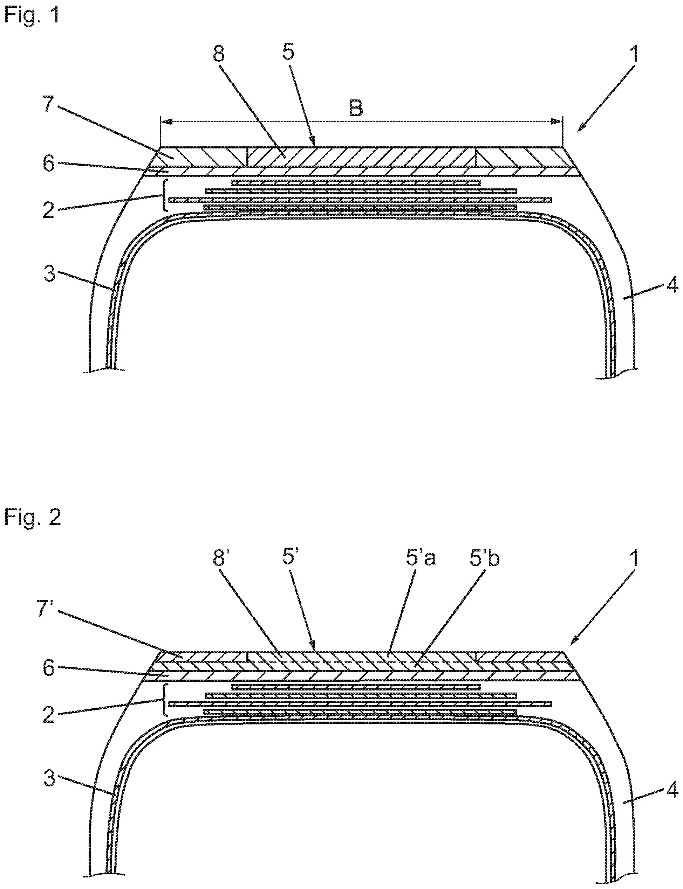

Weitere Merkmale, Vorteile und Einzelheiten der Erfindung werden anhand der Zeichnung, die schematisch Ausführungsbeispiele darstellt, näher beschrieben. Dabei zeigen
Fig. 1 bis Fig. 3 unterschiedliche Ausführungsformen der Erfindung anhand von Querschnitten durch einen Fahrzeugluftreifen im Bereich des Laufstreifens.

Die Figuren zeigen vereinfachte Querschnitte durch die Laufstreifenbereiche von Luftreifen für Nutzfahrzeuge, wobei von den üblichen Bauteilen des Reifens ein Laufstreifen 1, ein Gürtel 2 bestehend aus vier Gürtellagen mit in Gummi eingebetteten, vorzugsweise aus Stahl bestehenden Festigkeitsträgern, und eine ebenfalls mit Festigkeitsträgern verstärkte Radialkarkasse 3 dargestellt sind. Von den Seitenwänden des Reifens sind lediglich die beiden radial äußeren Endabschnitte gezeigt. Nicht dargestellt sind Wulstbereiche mit Wulstkernen, Kernprofilen und sonstigen Wulstbauteilen.

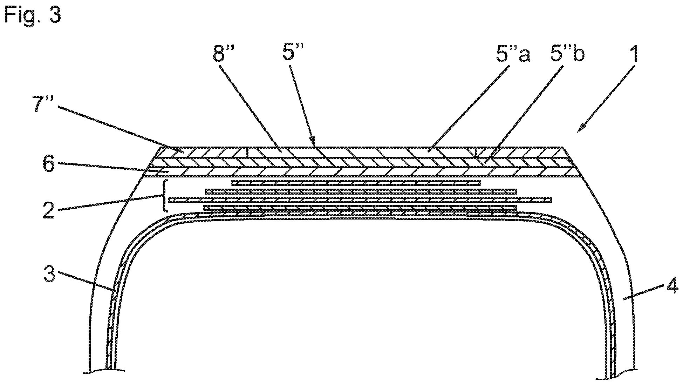

Bei sämtlichen dargestellten Ausführungsvarianten ist der Laufstreifen 1 in bekannter Weise in einen Laufstreifenoberteil 5 (Fig. 1), 5' (Fig. 2), 5" (Fig. 3) und einen Laufstreifenunterteil 6 geteilt. Der Laufstreifenunterteil 6 weist jeweils eine im Wesentlichen konstante Stärke in der Größenordnung von 2 mm bis 3 mm auf und besteht insbesondere aus einer der für Laufstreifenunterteile von Nutzfahrzeugreifen üblichen Gummizusammensetzungen. Der Laufstreifenoberteil 5, 5', 5" ist jener Teil des Laufstreifens 1, welcher mit einer in den Figuren nicht gezeigten Profilierung aus Umfangsnuten, Quernuten, Einschnitten und dergleichen versehen ist. Die Breite B kennzeichnet jeweils jenen Bereich des Laufstreifens 1, welcher beim Abrollen des Reifens (unter den Bedingungen gemäß den E.T.R.T.O. Standards) mit dem Untergrund in Kontakt kommt. Der Laufstreifenoberteil 5, 5', 5" weist insgesamt eine Dicke in der Größenordnung von 12 mm bis 24 mm auf, je nach Dimension und Einsatzzweck des Nutzfahrzeugreifens.

Bei der in Fig. 1 gezeigten Ausführungsvariante besteht der Laufstreifenoberteil 5 aus zwei in Umfangsrichtung umlaufenden Schulterabschnitten 7, welche aus einer ersten Kautschukmischung erstellt sind, und einem mittleren Abschnitt 8, welcher aus einer zweiten Kautschukmischung erstellt ist. Der mittlere Abschnitt 8 erstreckt sich über eine Breite von 60% bis 80% der Laufstreifenbreite B und besteht aus einer Gummizusammensetzung mit einer höheren Hysterese und einer guten "Chipping und Chunking"-Resistenz. Die beiden Schulterabschnitte 7, welche insbesondere übereinstimmende Breite aufweisen, bestehen aus einer Gummizusammensetzung mit einer niedrigeren Hysterese und einer etwas schlechteren "Chipping und Chunking"-Resistenz.

Die Gummizusammensetzung mit der niedrigeren Hysterese hat gemäß der Erfindung einen Rückprallwert bei Raumtemperatur, ermittelt gemäß DIN 53512, zwischen 40 und 60, vorzugsweise zwischen 45 und 55. Als Maß für die "Chipping und Chunking" Resistenz wird der Weiterreißwiderstand nach Graves bei Raumtemperatur (RT) gemäß DIN 53515 herangezogen, ermittelt mit Gummiproben, die bei 160°C über 15 Minuten geheizt wurden. In der Hysterese-ärmeren Gummizusammensetzung beträgt der Weiterreißwiderstand zwischen 60 N/mm und 120 N/mm, vorzugsweise zwischen 75 N/mm und 115 N/mm.

Die Gummizusammensetzung mit der höheren Hysterese weist einen Rückprallwert bei Raumtemperatur zwischen 30 und 50, insbesondere zwischen 35 und 45, auf. Der Weiterreißwiderstand nach Graves beträgt zwischen 90 N/mm und 150 N/mm, insbesondere zwischen 100 N/mm und 130 N/mm.

Zur Erzielung der gewünschten Eigenschaften- bessere "Chipping und Chunking"-Resistenz der Gummizusammensetzung im mittleren Abschnitt 8 und geringerer Wärmeaufbau in den Schulterabschnitten 7- sind die Unterschiede der Werte des Rückpralles und des Weiterreißwiderstandes von Bedeutung: Die Gummizusammensetzung in den Schulterabschnitten 7 sollte einen um mindestens 2%, vorzugsweise eine um mindestens 4% höheren Rückprallwert bei Raumtemperatur aufweisen als die Gummizusammensetzung im mittleren Abschnitt 8 des Laufstreifens, Der Weiterreißwiderstand in der Gummizusammensetzung im mittleren Abschnitt 8 sollte um mindestens 10 N/mm, insbesondere um mindestens 15N/mm, größer sein als in der Gummizusammensetzung in den Schulterabschnitten 7 des Laufstreifens.

Die Gummizusammensetzung im mittleren Abschnitt 8 des Laufstreifens 1 hat im Vergleich zur Gummizusammensetzung in den beiden Schulterabschnitten 7 einen höheren Wärmeaufbau. In den Schulterabschnitten 7 ist ein möglichst geringer Wärmeaufbau wichtig, da dadurch die Gürtelhaltbarkeit an den kritischen Gürtelkanten verbessert wird. Darüber hinaus wird in den beiden Schulterabschnitten 7 die Gummizusammensetzung derart ausgelegt, dass ihre Verletzungsbeständigkeit gering ist, insbesondere geringer ist als jene der Gummizusammensetzung im mittleren Abschnitt 8. Die Verletzungsbeständigkeit und die Hysterese der Gummizusammensetzungen werden durch bekannte Maßnahmen, wie beispielsweise den Anteil an nicht aktiviertem Silika, den Anteil an Ruß, den eingesetzen Rußtyp und/oder den Grad der Vernetzung eingestellt.

Bei der in Fig. 2 gezeigten Ausführungsvariante besteht der Laufstreifenoberteil 5' in radialer Richtung aus zwei, insbesondere übereinstimmend dick ausgeführten Schichten 5'a, 5'b. Die Schicht 5'b schließt unmittelbar an den Laufstreifenunterteil 6 an und erstreckt sich über die komplette Laufstreifenbreite. Die radial äußere Schicht 5'a ist, analog zum Laufstreifenoberteil 5 der Ausführungsform gemäß Fig. 1, in zwei Schulterabschnitte 7' und einen mittleren Abschnitt 8' geteilt. Der mittlere Abschnitt 8' erstreckt sich über 60% bis 80% der Laufstreifenbreite B, die beiden Schulterabschnitte 7' sind bevorzugt gleich breit ausgeführt. Die Rückprallelastizität und der Weiterreißwiderstand der Gummizusammensetzungen in den beiden Schulterabschnitten 7' und im mittleren Abschnitt 8' entsprechen jenen der Gummizusammensetzungen in den Abschnitten 7 und 8 der in Fig. 1 gezeigten Ausführungsform. Die Gummizusammensetzung in der Laufstreifenschicht 5'b kann mit jener im mittleren Abschnitt 8' übereinstimmen.

Fig. 3 zeigt eine Ausführungsvariante, bei welcher der Laufstreifenoberteil 5" in radialer Richtung ebenfalls aus zwei Laufstreifenschichten 5"a und 5"b aufgebaut ist. Die radial äußere Laufstreifenschicht 5"a besteht, analog zur Ausführungsvariante gemäß Fig. 2, aus zwei Schulterabschnitten 7" und einem mittleren Abschnitt 8" aus Gummizusammensetzungen mit Rückprallwerten und Weiterreißwiderständen bei Raumtemperatur wie oben angegeben. Die unmittelbar an den Laufstreifenunterteil 6 anschließende Laufstreifenschicht 5"b, welche sich über die komplette Laufstreifenbreite erstreckt, besteht aus einer Gummizusammensetzung, welche eine geringere Verletzungsbeständigkeit und einen geringeren Rollwiderstand aufweist als die Gummizusammensetzung im mittleren Abschnitt 8" der Laufstreifenschicht 5"a, insbesondere weist die Gummizusammensetzung in der Schicht 5"b den geringsten Rollwiderstand von sämtlichen im Laufstreifenoberteil verwendeten Gummizusammensetzungen auf. Die Dicke der Schicht 5"b kann in im Schulterbereich größer sein als im Mittenbereich.

**Tabelle 1 enthält Beispiele erfindungsgemäßer Gummizusammensetzungen (Kautschukmischungen) für die Schulterabschnitte 7, 7' und 7", den mittleren Abschnitt 8, 8', 8" und die Schicht 5"b sowie Ergebnisse von Messungen (Rückprall (RT) gemäß DIN 53 512, Weiterreißwiderstand nach Graves (RT) gemäß DIN 53 515) mit Prüfkörpern, die durch Vulkanisation von Proben über 15 Minuten bei 160° hergestellt wurden.**

| **Bestandteile** | **Anteile** | **Beispiel für 7, 7', 7"** | **Beispiel für 8, 8', 8"** | **Beispiel für 5"b** |
|---|---|---|---|---|
| NR | [phr] | 100 | 100 | 100 |
| Russ (N220) | [phr] | 46 | 50 | 43 |
| Silika | [phr] | 2 | 8 | 0 |
| Weichmacher | [phr] | 2 | 2 | 2 |
| Alterungsschutzmittel | In den üblichen Mengen | | | |
| Zinkoxid | | | | |
| Stearinsäure | | | | |
| Beschleuniger | [phr] | 1 | 0,75 | 1,1 |
| Schwefel | [phr] | 1,5 | 1,3 | 1,65 |
| | | | | |

| **Labor** | | | | |
|---|---|---|---|---|
| Rückprall (RT) | % | 45 | 39 | 48 |
| Graves (RT) | N/mm | 107 | 124 | 94 |

Die in den Tabellen angegebenen Mengen der einzelnen Bestandteile der Mischungen sind Gewichtsteile (phr, parts per hundred parts of rubber by weight), die jeweils auf 100 Gewichtsteile Kautschuk in der Mischung bezogen sind.

Die Erfindung ist auf die dargestellten und beschriebenen Ausführungsformen nicht eingeschränkt. Erfindungsgemäß ausgeführte Reifen können einen Laufstreifen ohne Laufstreifenunterteil aufweisen. Des Weiteren kann der Laufstreifen beziehungsweise der Laufstreifenoberteil aus mehr als zwei, insbesondere aus bis zu fünf Schichten aufgebaut werden, wobei die radial äußerste Schicht jene ist, die in axialer Richtung Abschnitte aus unterschiedlichen Gummizusammensetzungen gemäß der Erfindung aufweist. Die Schichten im Laufstreifen werden derart ausgeführt, dass sich der Rollwiderstand der verwendeten Gummizusammensetzung von Schicht zu Schicht verringert, sodass in der radial innersten Schicht die Gummizusammensetzung mit dem geringsten Rollwiderstand verwendet wird.

### Bezugsziffernliste

1.........Laufstreifen
2.........Gürtel
3.........Radialkarkasse
4.........Seitenwand
5.........Laufstreifenoberteil
5'........Laufstreifenoberteil
5".......Laufstreifenoberteil
5'a...... Schichten
5"a.....Schichten
5'b......Schichten
5"b.....Schichten
6.........Laufstreifenunterteil
7.........Schulterabschnitt
7'.......Schulterabschnitt
7"......Schulterabschnitt
8.........mittlerer Abschnitt
8'........mittlerer Abschnitt
8"........mittlerer Abschnitt

## Patentansprüche

1. Fahrzeugluftreifen, insbesondere für Nutzfahrzeuge, mit einer Radialkarkasse (3), einem mehrlagigen Gürtel (2) und einem Laufstreifen (1), welcher im Boden berührenden Bereich einen mittleren Abschnitt (8, 8', 8") aus einer ersten Gummizusammensetzung und zwei Schulterabschnitte (7, 7', 7") aus einer zweiten Gummizusammensetzung aufweist, wobei sich die beiden Gummizusammensetzungen in ihrem Rückprallwert bei Raumtemperatur unterscheiden,
**dadurch gekennzeichnet,**
**dass** die Gummizusammensetzung in den Schulterabschnitten (7, 7', 7") einen um mindestens 2 % höheren Rückprallwert bei Raumtemperatur aufweist als die Gummizusammensetzung im mittleren Abschnitt (8, 8', 8").

2. Fahrzeugluftreifen nach Anspruch 1, **dadurch gekennzeichnet, dass** die Differenz im Rückprallwert bei Raumtemperatur mindestens 4 % beträgt.

3. Fahrzeugluftreifen nach Anspruch 1, **dadurch gekennzeichnet, dass** die Gummizusammensetzung im mittleren Abschnitt (8, 8', 8") einen Weiterreißwiderstand bei Raumtemperatur aufweist, der um 10% größer ist als jener der Gummizusammensetzung der Schulerabschnitte (7, 7', 7").

4. Fahrzeugluftreifen nach Anspruch 3, **dadurch gekennzeichnet, dass** die Differenz im Weiterreißwiderstand mindestens 15 % beträgt.

5. Fahrzeugluftreifen nach einem der Ansprüche 1 bis 4, **dadurch gekennzeichnet, dass** die Gummizusammensetzung in den Schulterabschnitten (7, 7', 7") einen Rückprallwert bei Raumtemperatur zwischen 40 und 60, insbesondere zwischen 45 und 55, aufweist.

6. Fahrzeugluftreifen nach einem der Ansprüche 1 bis 4, **dadurch gekennzeichnet, dass** die Gummizusammensetzung im mittleren Abschnitt (8, 8', 8") einen Rückprallwert bei Raumtemperatur zwischen 30 und 50, insbesondere zwischen 35 und 45, aufweist.

7. Fahrzeugluftreifen nach einem der Ansprüche 1 bis 4, **dadurch gekennzeichnet, dass** die Gummizusammensetzung in den Schulterabschnitten (7, 7', 7") einen Weiterreißwiderstand zwischen 80 N/mm und 120 N/mm, insbesondere zwischen 75 N/mm und 115 N/mm, aufweist.

8. Fahrzeugluftreifen nach einem der Ansprüche 1 bis 4, **dadurch gekennzeichnet, dass** die Gummizusammensetzung im mittleren Abschnitt (8, 8', 8") einen Weiterreißwiderstand zwischen 90 N/mm und 150 N/mm, insbesondere zwischen 100 N/mm und 130 N/mm, aufweist.

9. Fahrzeugluftreifen nach einem der Ansprüche 1 bis 8, **dadurch gekennzeichnet, dass** die Schulterabschnitte (7, 7', 7") jeweils eine Breite von 10 % bis 20 % der Laufstreifenbreite (B) aufweist.

10. Fahrzeugluftreifen nach einem der Ansprüche 1 bis 9, **dadurch gekennzeichnet, dass** der Laufstreifen in radialer Richtung - abgesehen von einem gegebenenfalls vorgesehenen Laufstreifenunterteil (6) - aus zumindest zwei Schichten (5a, 5'b, 5'a, 5'b) besteht, wobei die radial äußerste Schicht die beiden Schulterabschnitte (7, 7', 7") und den mittleren Abschnitt (8, 8', 8") aufweist.

11. Fahrzeugluftreifen nach Anspruch 10, **dadurch gekennzeichnet, dass** die an die radial äußerste Schicht (5"a) anschließende Schicht (5"b) aus einer Gummizusammensetzung besteht, deren Rollwiderstand geringer ist als jener der Gummizusammensetzung im mittleren Abschnitt (8, 8', 8") der radial äußersten Schicht (5"a).

## Claims

1. Pneumatic vehicle tyre, in particular for commercial vehicles, comprising a radial carcass (3), a multi-ply breaker belt (2) and a tread (1), which has, in the area in contact with the ground, a central portion (8, 8', 8") of a first rubber composition and two shoulder portions (7, 7', 7") of a second rubber composition, the two rubber compositions differing in their rebound value at room temperature,
**characterized**
**in that** the rubber composition in the shoulder portions (7, 7', 7") has a rebound value at room temperature that is at least 2% higher than the rubber composition in the central portion (8, 8', 8").

2. Pneumatic vehicle tyre according to Claim 1, **characterized in that** the difference in the rebound value at room temperature is at least 4%.

3. Pneumatic vehicle tyre according to Claim 1,
**characterized in that** the rubber composition in the central portion (8, 8', 8") has a tear propagation resistance at room temperature that is 10% greater than that of the rubber composition of the shoulder portions (7, 7', 7").

4. Pneumatic vehicle tyre according to Claim 3,
**characterized in that** the difference in the tear propagation resistance is at least 15%.

5. Pneumatic vehicle tyre according to one of Claims 1 to 4, **characterized in that** the rubber composition in the shoulder portions (7, 7', 7") has a rebound value at room temperature of between 40 and 60, in particular between 45 and 55.

6. Pneumatic vehicle tyre according to one of Claims 1 to 4, **characterized in that** the rubber composition in the central portion (8, 8', 8") has a rebound value at room temperature of between 30 and 50, in particular between 35 and 45.

7. Pneumatic vehicle tyre according to one of Claims 1 to 4, **characterized in that** the rubber composition in the shoulder portions (7, 7', 7") has a tear propagation resistance of between 80 N/mm and 120 N/mm, in particular between 75 N/mm and 115 N/mm.

8. Pneumatic vehicle tyre according to one of Claims 1 to 4, **characterized in that** the rubber composition in the central portion (8, 8', 8") has a tear propagation resistance of between 90 N/mm and 150 N/mm, in particular between 100 N/mm and 130 N/mm.

9. Pneumatic vehicle tyre according to one of Claims 1 to 8, **characterized in that** the shoulder portions (7, 7', 7") each have a width of 10% to 20% of the tread width (B).

10. Pneumatic vehicle tyre according to one of Claims 1 to 9, **characterized in that** - apart from a possibly provided lower tread part (6) - the tread consists in the radial direction of at least two layers (5a, 5'b, 5'a, 5'b), the radially outermost layer having the two shoulder portions (7, 7', 7") and the central portion (8, 8', 8").

11. Pneumatic vehicle tyre according to Claim 10,
**characterized in that** the layer (5"b) adjoining the radially outermost layer (5"a) consists of a rubber composition of which the rolling resistance is less than that of the rubber composition in the central portion (8, 8', 8") of the radially outermost layer (5"a).

## Revendications

1. Pneumatique de véhicule, en particulier pour des véhicules utilitaires, avec une carcasse radiale (3), une ceinture à plusieurs couches (2) et une bande de roulement (1), qui présente dans la région en contact avec le sol une partie médiane (8, 8', 8") en une première composition de gomme et deux parties d'épaulement (7, 7', 7") en une seconde composition de gomme, dans lequel les deux compositions de gomme se différencient par leur coefficient de rebondissement à la température ambiante, **caractérisé en ce que** la composition de gomme dans les parties d'épaulement (7, 7', 7") présente un coefficient de rebondissement à la température ambiante supérieur d'au moins 2 % à la composition de gomme dans la partie médiane (8, 8', 8").

2. Pneumatique de véhicule selon la revendication 1, **caractérisé en ce que** la différence de coefficient de rebondissement à la température ambiante vaut au moins 4 %.

3. Pneumatique de véhicule selon la revendication 1, **caractérisé en ce que** la composition de gomme dans la partie médiane (8, 8', 8") présente une résistance à la déchirure à la température ambiante, qui est de 10 % plus élevée que celle de la composition de gomme des parties d'épaulement (7, 7', 7").

4. Pneumatique de véhicule selon la revendication 3, **caractérisé en ce que** la différence de résistance à la déchirure vaut au moins 15 %.

5. Pneumatique de véhicule selon l'une quelconque des revendications 1 à 4, **caractérisé en ce que** la composition de gomme dans les parties d'épaulement (7, 7', 7") présente un coefficient de rebondissement à la température ambiante compris entre 40 et 60, en particulier entre 45 et 55.

6. Pneumatique de véhicule selon l'une quelconque des revendications 1 à 4, **caractérisé en ce que** la composition de gomme dans la partie médiane (8, 8', 8") présente un coefficient de rebondissement à la température ambiante compris entre 30 et 50, en particulier entre 35 et 45.

7. Pneumatique de véhicule selon l'une quelconque des revendications 1 à 4, **caractérisé en ce que** la composition de gomme dans les parties d'épaulement (7, 7', 7") présente une résistance à la déchirure comprise entre 80 N/mm et 120 N/mm, en particulier entre 75 N/mm et 115 N/mm.

8. Pneumatique de véhicule selon l'une quelconque des revendications 1 à 4, **caractérisé en ce que** la composition de gomme dans la partie médiane (8, 8', 8") présente une résistance à la déchirure comprise entre 90 N/mm et 150 N/mm, en particulier entre 100 N/mm et 130 N/mm.

9. Pneumatique de véhicule selon l'une quelconque des revendications 1 à 8, **caractérisé en ce que** les parties d'épaulement (7, 7', 7") présentent respectivement une largeur de 10 % à 20 % de la largeur de la bande de roulement (B).

10. Pneumatique de véhicule selon l'une quelconque des revendications 1 à 9, **caractérisé en ce que** la bande de roulement se compose en direction radiale - abstraction faite d'une partie inférieure de bande de roulement (6) éventuellement prévue - d'au moins deux couches (5a, 5'b, 5'a, 5'b), dans lequel la couche radialement le plus extérieure présente les deux parties d'épaulement (7, 7', 7") et la partie médiane (8, 8', 8").

11. Pneumatique de véhicule selon la revendication 10, **caractérisé en ce que** la couche (5"b) se raccordant à la couche radialement la plus extérieure (5"a) est constituée d'une composition de gomme, dont la résistance au roulement est inférieure à celle de la composition de gomme dans la partie médiane (8, 8', 8") de la couche radialement la plus extérieure (5"a).
